# EUROPEAN PATENT APPLICATION

(11) **EP 2 266 696 A1**
(43) Date of publication of application: **29.12.2010**
(21) Application number: 09163492.3
(22) Date of filing: 23.06.2009
(51) Int. Cl.: B01L 3/02, C12M 1/26

(54) **Device for singularizing micro-objects**

(71) Applicant: Veterinärmedizinische Universität Wien, 1210 Vienna (AT)
(72) Inventor: Rossmanith, Peter, 2531 Gaaden (AT); Wagner, Martin, 1180 Vienna (AT); Röder, Barbara, 1140 Vienna (AT)
(74) Representative: Sonn & Partner Patentanwälte

(57) **Abstract**

The present invention relates to a device for singularizing micro-objects on a solid support or into a solution, said device comprising a sample reservoir (1) for receiving a sample solution comprising at least one micro-object, wherein said sample reservoir (1) is fluidly connected via a tube (2) with a capillary (3) arranged in a capillary holder (4) and said sample reservoir (1) or said tube (2) is connected to at least one means for moving the at least one micro-object within the device.

## Description

The present invention relates to a device for separating and singularizing micro-objects.

Micro-objects such as microbial cells can be separated or singularized in various ways. The simplest method for separating micro-objects involves simple serial dilution protocols, such as the most probable number method (MPN). Such methods, however, suffer from a lack of certainty that the diluted solution indeed contains only one micro-object (e.g. one viable single cell). In such cases the relationship between statistics and the accuracy of data obtained by multiple dilution procedures becomes important regarding the Poisson distribution of highly diluted micro-objects.

Combined microinjection and micromanipulation methods are alternative applications. These are widespread routine techniques that have been developed recently for large eukaryotic cells. However, application of these methods to smaller micro-objects such as prokaryotic cells leads to new physical conditions defined by the technical equipment secondary to the size of the handled cells (<1 µm). These include limitations of fluorescence microscopy, general microscopic analysis, and photographic documentation.

A device for separating micro-objects from a pool of micro-objects is, for instance, disclosed in US 6,517,779. Said device comprises a pipette system which allows to aspirate micro-objects from a sample containing said objects. The pipette system containing the aspirated objects is disposed in a micro-manipulator and can be moved to a target site, where said micro-objects can be flushed out of the pipette system. Such a device does not allow to singularize/separate micro-objects out of a pool of such objects and to deposit them on a solid support. A further disadvantage of devices as disclosed in US 6,517,779 is that the diameter of the pipette has to be relatively large in order to allow the aspiration of the micro-objects. If, however, the the diameter is too large, it is not possible to guarantee that in the course of the deposition step only one single micro-object is deposited on the solid support. Such a device does not allow continuous deposition of such objects, thus not supporting high-throughput application.

It is an object of the present invention to provide a device which overcomes the drawbacks of the devices for singularizing micro-objects known in the art.

A further object of the present invention is the provision of a device as described above which can easily be automated and which allows to singularize viable cells. Furthermore, this device shall allow to singularize accurately micro-objects from a pool of such objects.

The present invention relates to a device for singularizing micro-objects on a solid support or into a solution, said device comprising a sample reservoir for receiving a sample solution comprising at least one micro-object, wherein said sample reservoir is fluidly connected via a tube with a capillary arranged in a capillary holder and said sample reservoir or said tube is connected to at least one means for moving the at least one micro-object within the device.

The device of the present invention can be employed to singularize micro-objects from a pool of such objects. In contrast to the devices of the prior art the micro-objects to be singularized are not aspirated into a pipette and afterwards flushed out from said pipette. The micro-objects present in the sample solution of the sample reservoir are moved from said reservoir via a tube to the capillary arranged in a capillary holder which may be part of a micro-manipulator. The capillary of the micro-manipulator can be moved in order to deposit the micro-objects, for instance, on a solid support.

The micro-objects in the device are moved by respective means. These means are able to move the sample solution together with the micro-objects from the sample reservoir to the capillary.

The passing of a micro-object through the capillary notch can be visually controlled by providing a microscope, preferably an inverted microscope.

With the device of the present invention it is possible for the first time to singularize/separate cells with a 100% accuracy. This is achieved by preferably using a capillary notch having an inner diameter which is substantially the same (i.e. maximum of 5 times larger than the micro-object to be separated, preferably maximum of 4 times, maximum of 3 times, maximum of 2 times, maximum of 1.5 times). All other devices known in the art are not suitable because they allow the passing of more than one micro-object through the capillary notch at a time. This would lead to a poisson distribution of the micro-object.

"Micro-object", as used herein, refers to objects of any kind having a dimension of less than 1000 µm, preferably less than 500 µm, more preferably less than 100 µm. The micro-object may have any geometrical form. These objects have further a dimension of more than 0.01 µm, more preferably of more than 0.1 µm.

The term "singularize", as used herein, means that the individual micro-objects of a pool of micro-objects are separated from each other.

The micro-objects present in the device of the present invention can be moved from the sample reservoir to the capillary in order to singularize the individual micro-objects by applying pressure with a pressure generating means and/or by applying an electric current with a means for applying an electric current.

If an electric current is applied, the micro-objects to be singularized have to be charged (negatively or positively). The application of an electric current has the advantage that only the charged micro-objects present in the sample are moved from the sample reservoir via the tube to the capillary of the micro-manipulator and not or only to a very low extent the solution in which the micro-objects are provided. This would also allow to concentrate the micro-objects at the deposition site.

The means for applying an electric current preferably comprise a DC power source whose poles are connected to the sample solution and to the site of deposition (e.g. glass or metal slide comprising a buffer drop thereon). The poles are adjusted in a way to allow the movement of the micro-objects from the sample reservoir or capillary to the site of deposition.

Pressure generating means cause a physical pressure to the sample solution so that the sample solution is moved through the device. Pressure generating means may be a syringe with a piston, a pump or a micro-injector, which are all connected to the tube or a reservoir of the device of the present invention.

The means for pressure generating means can be combined with the means for applying an electric current. The device can consequently consist of a hydraulic part for the rough adjustment of the flow of the cells from the sample reservoir to the capillary and an electric part for fine tuning the flow of the charged micro-objects. The application can also consist of the electric part only. The kind of application depends on the mounting of the cathode and the anode as flow of the charged micro-objects occurs in the electric field between the electrodes. The flow of the micro-objects (e.g. bacterial cells or other charged biological objects) is provided by electro motion of the charged particles in an electric field. In general, the flow of the micro-objects provided by the current occurs downstream the respective repulsing pole according to the charge of the micro-objects. The electrodes are mounted either upstream the reservoir or at the conductive capillary holder or anywhere in between. The speed of the flow can be regulated via change of the voltage or the amperage or the power output of the power supply.

According to a preferred embodiment of the present invention the device comprises further at least one fluid reservoir for receiving a hydraulic fluid, wherein said fluid reservoir is fluidly connected to the sample reservoir or to said tube.

The at least one fluid reservoir comprises a hydraulic fluid which - when subjected to pressure - moves the sample solution and consequently the micro-objects through the device to the deposition site of said objects. The fluid reservoir is therefore fluidly connected - directly or via a further tube - to the sample reservoir or to the tube from the sample reservoir to the capillary of the micro-manipulator.

According to a further preferred embodiment of the present invention the pressure generating means is at least one micro-injector fluidly connected to the sample reservoir, to the fluid reservoir or to the tube.

In order to control the movement of the sample and/or hydraulic fluid within the device more efficiently the device comprises at least one micro-injector. More preferably the device comprises more than one microinjector, wherein the microinjector comprises syringes having different volumes. The micro-injector may be filled with hydraulic fluid. The different volumes of the syringes lead to different lever ratios directly correlating to the volumes of the syringes by means of moved amounts of liquid per length of piston travel.

According to a preferred embodiment of the present invention the hydraulic fluid is a buffer or oil, preferably chemically inert and stable mineral oil.

When using an electrical current to singularize the micro-objects the sample solution as well as the hydraulic fluid, when used, have to be conductive. To ensure sufficient conductance of the system conventional buffer systems like TBE (Tris-borate-EDTA), TAE (Tris-acetate-EDTA), TPE (Tris-phosphate-EDTA), Tris-Glycin, denaturating MOPS or Laemmli - Buffer are preferably used. Furthermore, solutions of anorganic or organic salts as well as acids and bases of organic or anorganic nature can be used in combination with or without stabilizing buffers. Additionally, ionic liquids can be used as transport buffer in combination with or without stabilizing buffers. The range of possible concentrations of the various transport buffers has to be assessed case per case. For instance, 10 × TBE may be used to singularize bacterial cells.

If the micro-objects in the device are moved by applying pressure generating means, the hydraulic fluid may be an oil, preferably a mineral oil. The oil may be dyed allowing to follow the distribution of the mineral oil in the device of the present invention.

Detergents are preferably used to decrease the surface tension of the buffer in order to reduce the stress on (living) biological micro-objects within the capillary notch. Preferably, non ionic detergents are used which should not impair the viability of the bacterial cells (e.g. Tween). The use of charged (anionic, cationic or zwitter-ionic) detergents is also possible the charge of the detergents, however, has to be taken in account in terms of the overall charge of the buffer system within the device. The buffer comprises preferably at least one detergent, preferably a polysorbate, more preferably Tween, preferably in an amount of > 0.1% and < 10%, more preferably > 0.5 and < 2%, whereby the amount of detergent can be varied, depending on buffer composition.

According to a further preferred embodiment of the present invention a manometer is fluidly connected to the tube or capillary holder.

A manometer allows to measure the pressure within the device. A manometer can also be used to determine whether a micro-object has passed the capillary notch. When a micro-object approaches the capillary notch the pressure in the device, in particular in the capillary, increases and drops to a normal level after said micro-object has passed the capillary notch. The provision of a manometer in the device of the present invention allows its automation. In an automated version of the device of the present invention the manometer can serve as a sensor for indicating the passing of a micro-object through the capillary notch.

According to a preferred embodiment of the present invention the means for applying an electric current is a power source, preferably a power source producing a direct current, which positive or negative pole is connected to the sample solution via the tube and/or the capillary and the other pole is connected to the solid support whereon the singularized cells are deposited in or connected to the solution in which the singularized cells are delivered.

The electric field for transport of the charged micro-objects is chosen in consideration of the diameter of the capillary at the tip, the buffer composition, the kind and size of the micro-objects (e.g. bacterial cell) in relation to the diameter of the capillary and the overall resistance of the system. Modification of the voltage or the amperage or the power output of the power supply allows adjustment of the flow speed of the charged micro-objects within the system. The electric field can be generated by a conventional power supply.

In order to measure the electrical current and/or the potential difference between the device and the deposition site of the micro-objects the device and the deposition site (e.g. solid support, solution) is connected to a voltmeter and/or galvanometer.

The measurement of these parameters allows to determine whether a micro-object passes through the capillary and capillary notch when the current or voltage drops.

If electric current is applied the solid support is preferably electrically conductive. Alternatively or additionally a drop of an electrically conductive solution is positioned on said solid support and the tip of the capillary of the micro-manipulator is dipped therein, in order to allow the current to flow and consequently to move the micro-objects from the device to the deposition site.

According to a preferred embodiment of the present invention the inner diameter of the capillary notch is substantially identical to the diameter of the micro-object.

The inner diameter of the capillary notch is chosen in relation to the size of the micro-objects to be singularized. Since the micro-objects of the present invention have a size of at least 0.01 µm the inner diameter of the capillary notch is approx. at least 0.01 µm, preferably at least 0.1 µm, more preferably at least 1 µm, even more preferably at least 2 µm. The micro-objects of the present invention may have a size of up to 1000 µm, preferably up to 500 µm, more preferably up to 100 µm, even more preferably up to 50 µm, in particular up to 20 µm. For instance, if bacterial cells are singularized with the device of the present invention the diameter of the capillary notch will be approx. 0.5 - 2 µm.

The proportion of the diameter of the micro-objects and the diameter of the respective capillary notch depends also on the physical properties and consequently on the composition of the sample solution present in the device. In terms of ions for a constitution of a stable electric field providing the required speed of flow of the micro-objects on the one hand. On the other hand the diameter has to be chosen as small as possible to prevent unmonitored flow of the micro-objects beyond the focus level of the microscope (if optical monitoring of the process is required). Due to the size of the micro-objects these effects play a key role in monitoring the process.

According to a preferred embodiment of the present invention the micro-object is a cell, preferably a microbial cell, more preferably a bacterial cell.

The solid support whereon the micro-objects are disposed may be positioned on or may be a movable member of a microscope, preferably an inverted microscope.

Another aspect of the present invention relates to a kit comprising a device according to the present invention and a microscope, preferably an inverted microscope.

Another aspect of the present invention relates to a method for singularizing micro-objects on a solid support or into a solution with a device according to the present invention comprising the steps of:
- providing a sample solution comprising at least one micro-object in the sample reservoir,
- applying a hydraulic and/or electrical force to the sample solution for moving the at least one micro-object from the sample reservoir via the capillary to the solid support or solution.

According to a preferred embodiment of the present invention the micro-object is a cell, preferably a microbial cell, more preferably a bacterial cell.

The device of the present invention is preferably employed for the isolation of cells, in particular bacterial cells. The device may be used to isolate said cells from a lysed sample, which is obtained with methods known in the art, as described, for instance, in WO 2008/017097.

A major advantage of the method according to the present invention is the possibility to isolate viable biological micro-objects.

The present invention is further illustrated in the following figures, however, without being restricted thereto.

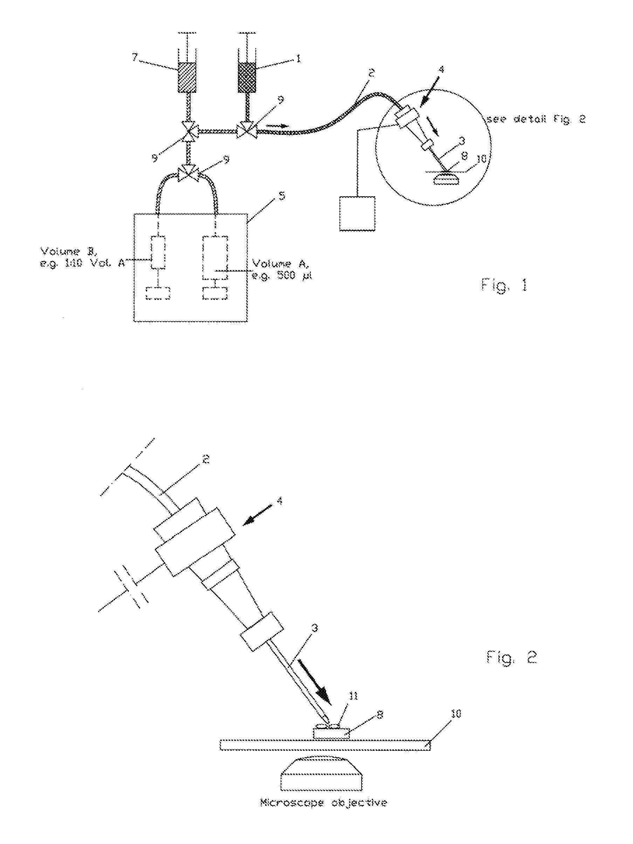

Fig. 1 shows a device according to the present invention with a sample reservoir 1, a tube 2 connected to said sample reservoir 1, a micro-manipulator/capillary holder 4 with a capillary 3, a micro-injector 5 and a fluid reservoir. All components of the device are fluidly connected via at least one tube 2. In order to selectively connect and disconnect the components from the device, the components are connected to the tube 2 via valves 9.

The assembly of Fig. 1 allows to move the micro-objects 11 from the sample reservoir 1 to the deposition site 8 by applying pressure with the micro-injectors 5. The micro-injector 5 comprises two syringes with varying volumes. Such an assembly allows to efficiently control the pressure on the sample fluid and on the micro-objects. The pressure applied directly influences the flow rate of the sample solution through the capillary 3 of the micro-manipulator 4.

The sample reservoir 1 contains the sample with the micro-objects to be singularized. The fluid reservoir comprises a fluid (e.g. aqueous or oily) which is used to push the sample solution in the direction of the micro-manipulator 4. The fluid is preferably dyed and/or not mixable with the sample solution.

In Fig. 2 the micro-manipulator 4 is shown. The capillary 3 of said micro-manipulator 4 is positioned above a solid support 8 (e.g. metal or glass slide) which is placed on an object holder 10 of a microscope. The micro-objects 11 can be deposited on said solid support 8. The passing of the micro-object through the opening of the capillary can be monitored by using said microscope.

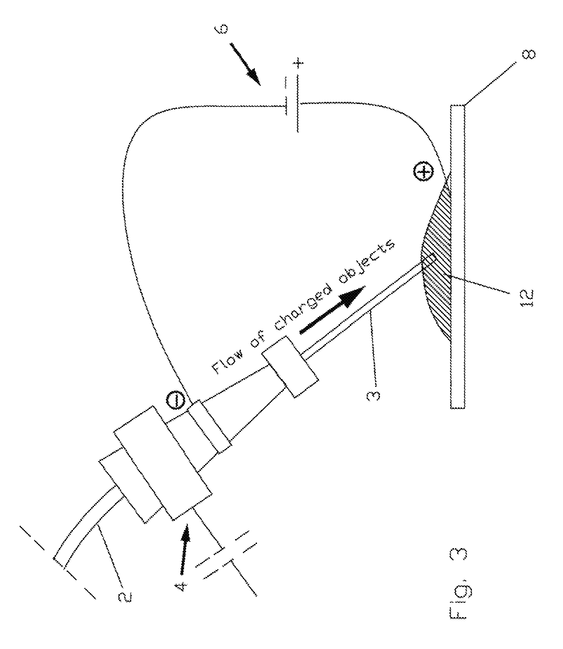

Fig. 3 shows an alternative embodiment of the present invention wherein the micro-objects 11 are moved towards the deposition site 8 by applying electric direct current with the help of a power source 6. On a glass slide 8 an electrically conductive fluid drop 12 is positioned. The electrically conductive fluid drop 12 is connected to a pole (e.g. anode) of the power source 6, whereas the other pole (e.g. cathode) is connected to the sample liquid via, for instance, the micro-manipulator 4. The charged micro-objects are moved in the electrical field through the capillary 3 to the deposition site. The advantage of such an assembly is that the micro-object can be transferred to a solution having another composition than the sample solution. Another major advantage of this assembly is, that nearly no sample solution will be transferred to the deposition site, so that the solution volume at said deposition site is not excessively increased when the number of micro-objects in the sample solution is low.

Of course it is possible to combine the assembly of Figs. 1 and 2 with the assembly of Fig. 3.

## Claims

1. Device for singularizing micro-objects on a solid support or into a solution, said device comprising a sample reservoir (1) for receiving a sample solution comprising at least one micro-object, wherein said sample reservoir (1) is fluidly connected via a tube (2) with a capillary (3) arranged in a capillary holder (4) and said sample reservoir (1) or said tube (2) is connected to at least one means for moving the at least one micro-object within the device.

2. Device according to claim 1, **characterised in that** the means for moving the at least one micro-object within the device is a pressure generating means (5) and/or a means for applying an electric current (6).

3. Device according to claim 1 or 2, **characterised in that** said device comprises further at least one fluid reservoir (7) for receiving a hydraulic fluid, wherein said fluid reservoir (7) is fluidly connected to the sample reservoir (1) or to said tube (2).

4. Device according to claim 2 or 3, **characterised in that** the pressure generating means (5) is at least one micro-injector (5) fluidly connected to the sample reservoir (1), to the fluid reservoir (7) or to the tube (2).

5. Device according to claim 3 or 4, **characterised in that** said hydraulic fluid is a buffer or oil, preferably mineral oil.

6. Device according to claim 5, **characterised in that** the buffer comprises at least one detergent, preferably a polysorbate, more preferably Tween, preferably in an amount of > 0.1% and < 10%, more preferably > 0.5 and < 2%, whereby the amount of detergent can be varied, depending on buffer composition.

7. Device according to any one of claims 2 to 6, **characterised in that** a manometer is fluidly connected to the tube (2).

8. Device according to any one of claims 2 to 7, **characterised in that** the means for applying an electric current (6) is a power source (6), preferably a power source producing a direct current, which positive or negative pole is connected to the sample solution via the tube (2) and/or the capillary (3) and the other pole is connected to the solid support (8) whereon the singularized cells are deposited or connected to the solution in which the singularized cells are delivered.

9. Device according to claim 8, **characterised in that** a voltmeter and/or galvanometer is connected thereto.

10. Device according to any one of claims 1 to 9, **characterised in that** the inner diameter of the capillary (3) notch is substantially identical to the diameter of the micro-object.

11. Device according to any one of claims 1 to 10, **characterised in that** the micro-object is a cell, preferably a microbial cell, more preferably a bacterial cell.

12. Device according to any one of claims 1 to 11, **characterised in that** the solid support (8) is disposed on a movable member of a microscope.

13. Kit comprising a device according to any one of claims 1 to 11 and a microscope.

14. Method for singularizing micro-objects on a solid support or into a solution with a device according to any one of claims 1 to 12 comprising the steps of:
- providing a sample solution comprising at least one micro-object in the sample reservoir,
- applying a hydraulic and/or electrical force to the sample solution for moving the at least one micro-object from the sample reservoir via the capillary to the solid support or solution.

15. Method according to claim 14, **characterised in that** the micro-object is a cell, preferably a microbial cell, more preferably a bacterial cell.
